# EUROPEAN PATENT APPLICATION

(11) **EP 2 555 133 A1**
(43) Date of publication of application: **06.02.2013**
(21) Application number: 11762379.3
(22) Date of filing: 15.02.2011
(51) Int. Cl.: G06F 21/20, G06F 21/24

(54) **THIN-CLIENT SYSTEM, ACCESS CONTROL METHOD, AND ACCESS CONTROL METHOD IN SAME**

(30) Priority: 30.03.2010 JP 2010077235
(71) Applicant: NEC Corporation, Tokyo 108-8001 (JP)
(72) Inventor: KIMIZUKA, Masahiko, Tokyo 108-8001 (JP)
(74) Representative: Vossius & Partner
(86) International application number: PCT/JP2011/053152
(87) International publication number: WO 2011/122138

(57) **Abstract**

To heighten security in a thin client system, the thin client system includes: a communication unit 21 that receives a user ID and terminal information including at least current position information from a client terminal 10; a policy information extraction unit 22 that extracts policy information relating to a security policy stored in association with the terminal information received by the communication unit 21 on the basis of the terminal information; a virtual machine allocation unit 32 that allocates a virtual machine virtualizing an environment of the client terminal 10 to a server device 30 on the basis of the user ID received from the client terminal 10; and an access control unit 33 that restricts access to the virtual machine allocated by the virtual machine allocation unit 32 on the basis of the policy information extracted by the policy information extraction unit 22.

## Description

### BACKGROUND

The present invention relates to a thin client system, as well as an access control method and an access control program for the thin client system.

Recent years have witnessed an increase in the number of business enterprises and the like using a thin client system to reduce system operation and management costs. In a thin client system, functions installed in a client terminal are minimized and resources such as application software and data are managed collectively on a server side. Patent Document 1 discloses a thin client system that controls activation and stoppage of a virtual machine that virtualizes an environment of a client terminal on a server in accordance with a current position of a user.

Patent Document 1: Patent Publication JP-A-2008-187338

In this conventional thin client system, the virtual machine on the server can be used whenever the client terminal and the virtual machine are capable of communicating with each other. Hence, in a case where a laptop PC (Personal Computer) that can be carried out of a company office, for example, is used as the client terminal, confidential information can be displayed on a screen of the laptop PC in a public place such as an airport or a railway station. In such cases, the confidential information may be viewed stealthily by over-the-shoulder hacking, for example, and as a result, the information may be leaked. The confidential information may also be leaked if the laptop PC is stolen.

### SUMMARY

The present invention has been designed to solve the problem described above, and an object thereof is to provide a thin client system, as well as an access control method and an access control program for the thin client system, in which security can be heightened.

A thin client system according to the present invention includes: a reception unit that receives a user ID and terminal information including at least current position information from a client terminal; an extraction unit that extracts policy information relating to a security policy stored in association with the terminal information received by the reception unit on the basis of the terminal information; an allocation unit that allocates resources for virtualizing an environment of the client terminal on the basis of the user ID received by the reception unit; and an access control unit that restricts access to the resources allocated by the allocation unit on the basis of the policy information extracted by the extraction unit.

An access control method for a thin client system according to the present invention includes: a reception step of receiving a user ID and terminal information including at least current position information from a client terminal; an extraction step of extracting policy information relating to a security policy stored in association with the terminal information received in the reception step on the basis of the terminal information; an allocation step of allocating resources for virtualizing the client terminal on the basis of the user ID received in the reception step; and a control step of restricting access to the resources allocated in the allocation step on the basis of the policy information extracted in the extraction step.

An access control program according to the present invention causes a computer to execute the respective steps included in the access control method described above.

According to the present invention, security can be heightened in a thin client system.

### DESCRIPTION OF THE DRAWINGS

Fig. 1 is a block diagram showing a configuration of a thin client system according to an embodiment;
Fig. 2 is a view showing a data configuration of a client terminal information table;
Fig. 3 is a view showing a data configuration of a policy management table;
Fig. 4 is a view showing a data configuration of a policy information table; and
Fig. 5 is a flowchart illustrating processing procedures executed when access from a client terminal is controlled in the thin client system.

### DETAILED DESCRIPTION

A preferred embodiment of a thin client system as well as an access control method and an access control program for the thin client system according to the present invention will be described below with reference to the attached drawings.

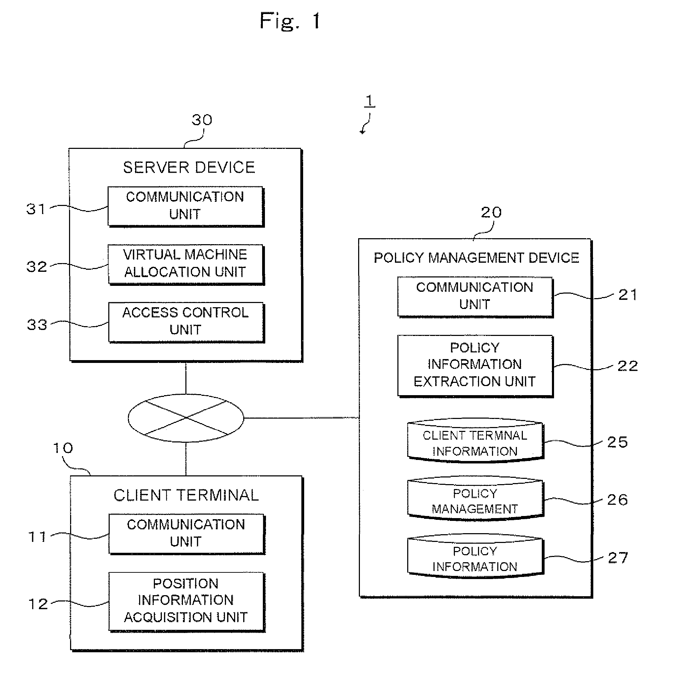

First, referring to Fig. 1, a configuration of a thin client system according to this embodiment will be described. Fig. 1 is a view showing the configuration of the thin client system according to this embodiment in pattern form. As shown in Fig. 1, a thin client system 1 includes a client terminal 10, a policy management device 20, and a server device 30.

The thin client system 1 according to this embodiment is configured to include functions of a known thin client system to be described below, for example. The server device functions to manage an OS (Operating System), application software, various data, and so on of the client terminal collectively. The server device also functions to form a virtual machine that virtualizes an environment of the client terminal for each client terminal, and activates the virtual machine in response to an operation instruction from the client terminal.

The client terminal 10 shown in Fig. 1 includes a communication unit 11 that exchanges data with another device, and a position information acquisition unit 12.

The communication unit 11 transmits a user ID and terminal information to the policy management device 20. The user ID is information for identifying a user operating the client terminal 10. The terminal information is information relating to the client terminal 10, which is registered in advance in a memory. The terminal information includes, for example, IP address information, terminal classification information, data storage permission information, and position information. The terminal classification information is information specifying a terminal classification of the client terminal 10, and corresponds to information indicating a desktop PC or a laptop PC, for example. The data storage permission information is information indicating whether or not data can be stored on the client terminal 10. The position information is information indicating a position of the client terminal 10.

The communication unit 11 receives virtual machine information relating to the virtual machine allocated to the client terminal 10 from the server device 30. On the basis of the virtual machine information, the communication unit 11 transmits a request to access the virtual machine to the server device 30.

The position information acquisition unit 12 obtains the position information included in the terminal information. More specifically, the position information acquisition unit 12 obtains latitude/longitude information corresponding to the current position of the client terminal 10, which is determined by a GPS (Global Positioning System), for example, as the position information. The position information acquisition unit 12 according to this embodiment determines whether the client terminal is in a company office or outside the office on the basis of the latitude/longitude information obtained as the position information and latitude/longitude information indicating a position within the office, and sets information indicating whether the client terminal is positioned inside or outside the office as the position information of the terminal information to be transmitted to the policy management device 20.

The policy management device 20 includes a communication unit 21 that exchanges data with another device, and a policy information extraction unit 22. The policy management device 20 also includes a client terminal information table 25, a policy management table 26, and a policy information table 27.

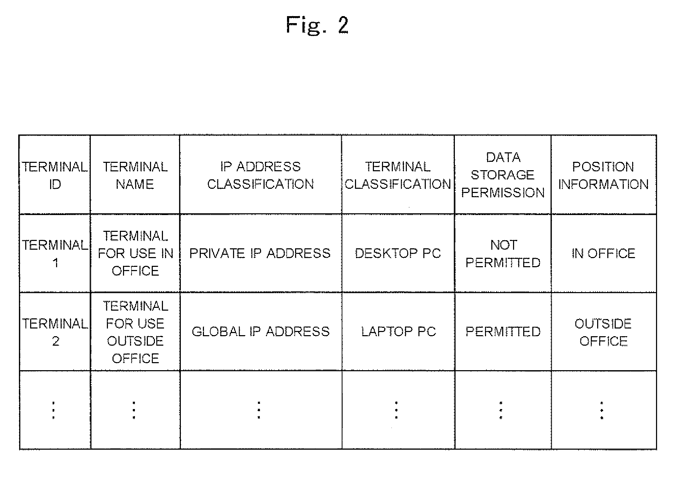

Referring to Fig. 2, a data configuration of the client terminal information table 25 will be described. The client terminal information table 25 includes a record (to be referred to hereafter as a "client terminal information record") for each client terminal 10. The client terminal information record includes, as data items, a terminal ID item, a terminal name item, an IP address classification item, a terminal classification item, a data storage permission item, and a position information item, for example.

Identification information for specifying the client terminal 10 uniquely is stored in the terminal ID item. A name of the client terminal 10 is stored in the terminal name item. An IP address allocated to the client terminal 10 is stored in the IP address classification item. It is possible to differentiate between a private IP address and a global IP address from the content of the IP address. Information specifying the terminal classification of the client terminal 10 is stored in the terminal classification item. Information indicating whether or not data can be stored on the client terminal 10 is stored in the data storage permission item. Information indicating whether the client terminal 10 is positioned inside or outside the company office is stored in the position information item.

The information stored respectively in the IP address classification item, terminal classification item, data storage permission item, and position information item included in the client terminal information record is registered in advance as the terminal information of the client terminal 10.

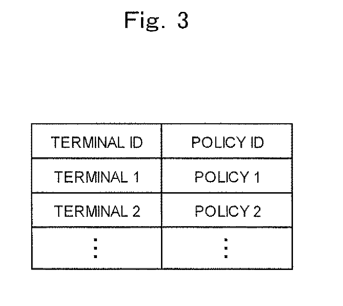

Referring to Fig. 3, a data configuration of the policy management table 26 will be described. The policy management table 26 includes a record (to be referred to hereafter as a "policy management record") for each client terminal 10. The policy management record includes, as data items, a terminal ID item and a policy ID item, for example. Identification information uniquely specifying the client terminal 10 is stored in the terminal ID item. Identification information uniquely specifying policy information relating to a security policy applied to the virtual machine is stored in the policy ID item.

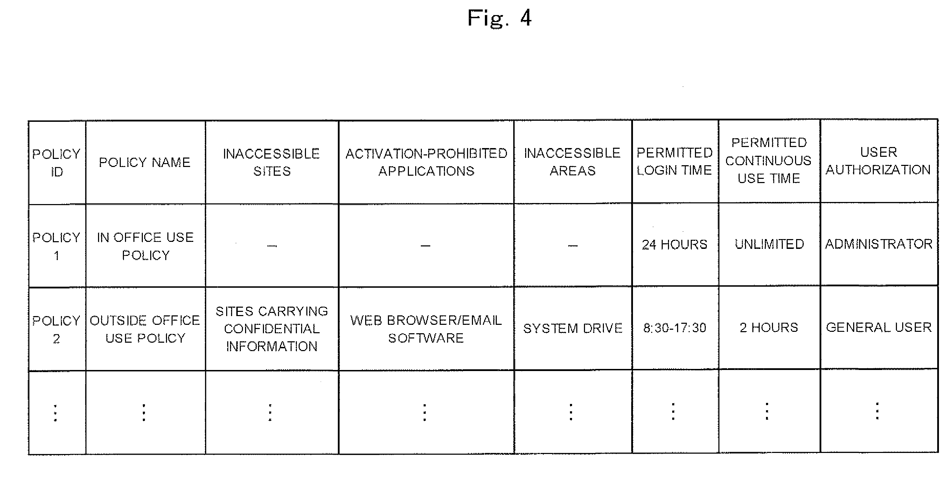

Referring to Fig. 4, a data configuration of the policy information table 27 will be described. The policy information table 27 includes a record (to be referred to hereafter as a "policy information record") for each set of policy information. The policy information record includes, as data items, a policy ID item, a policy name item, an inaccessible site item, an activation-prohibited application item, an inaccessible area item, a permitted login time item, a permitted continuous use time item, and a user authorization item, for example.

Identification information uniquely specifying the policy information is stored in the policy ID item. A name of the policy information is stored in the policy name item. Information specifying access-restricted websites is stored in the inaccessible site item. Information specifying activation-restricted applications is stored in the activation-prohibited application item. Information specifying access-restricted drives, folders, and files is stored in the inaccessible area item. Information specifying a permitted login time span is stored in the permitted login time item. Information specifying a permitted continuous use time is stored in the permitted continuous use time item. Information specifying authorization applied to a user, for example administrator authorization or general user authorization, is stored in the user authorization item.

The communication unit 21 of the policy management device 20 shown in Fig. 1 receives the user ID and terminal information transmitted by the client terminal 10. The communication unit 21 then transmits the user ID and policy information of the client terminal 10 to the server device 30.

The policy information extraction unit 22 extracts the policy information on the basis of the terminal information received from the client terminal 10. This will now be described more specifically. First, the policy information extraction unit 22 extracts the client terminal information record corresponding to the terminal information from the client terminal information table 25. Next, the policy information extraction unit 22 extracts the policy management record corresponding to the terminal ID included in the client terminal information record from the policy management table 26. Next, the policy information extraction unit 22 extracts the policy information corresponding to the policy ID included in the policy management record from the policy information table 27.

The server device 30 includes a communication unit 31 that exchanges data with another device, a virtual machine allocation unit 32, and an access control unit 33.

The communication unit 31 receives the user ID and policy information of the client terminal 10, transmitted by the policy management device 20. The communication unit 31 then transmits the virtual machine information corresponding to the virtual machine allocated to the client terminal 10 to the client terminal 10.

The virtual machine allocation unit 32 allocates resources required to virtualize the environment of the client terminal 10 on the basis of the user ID of the client terminal 10, received from the policy management device 20. As a result, a virtual machine is formed for each client terminal 10 on the server device 30. The resources include, for example, a memory area, an OS, application software, various data, and so on.

The access control unit 33 controls access from the client terminal 10 via the virtual machine in accordance with the policy information of the client terminal 10, received from the policy management device 20. For example, when the policy ID of the policy information is "Policy 2", as shown in Fig. 4, the client terminal 10 is prohibiting from accessing "sites carrying confidential information", prohibited from activating a web browser and email software, and prohibited from accessing a "system drive". Further, the login time of the client terminal 10 is limited to "8:30 to 17:30", continuous use is limited to "2 hours", and user authorization is limited to "general user" authorization.

Here, the policy management device 20 and the server device 30 are physically constituted by a CPU (Central Processing Unit), a storage device, and an input/output interface, for example. The storage device includes, for example, a ROM (Read Only Memory) or an HDD (Hard Disk Drive) that stores programs and data used for processing by the CPU, a RAM (Random Access Memory) mainly used as a working area for various control processing, and so on. These elements are connected to each other by a bus. The CPU can realize the functions of the respective units of the policy management device 20 and the server device 30 by executing a program stored in the ROM and processing messages received via the input/output interface and data expanded in the RAM.

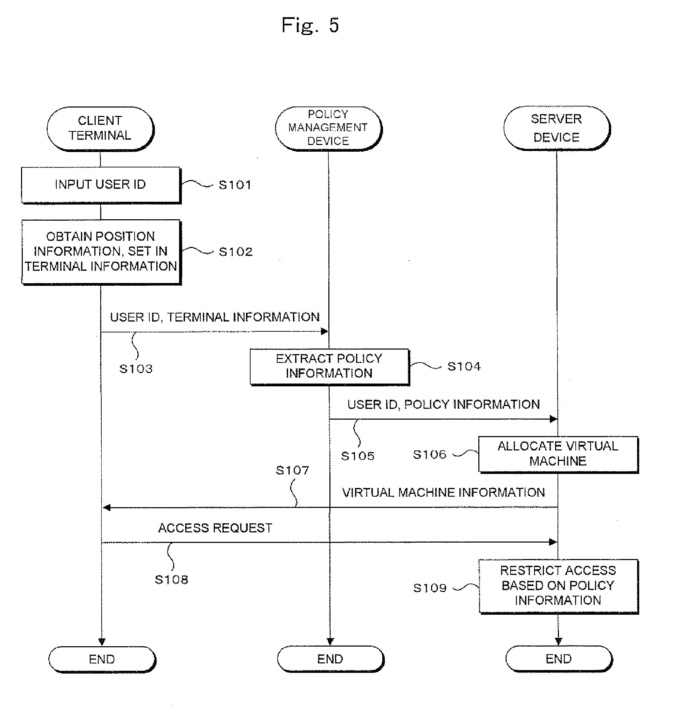

Next, referring to Fig. 5, an operation of the thin client system 1 will be described. Fig. 5 is a flowchart illustrating processing procedures executed when access from the client terminal 10 is controlled in the thin client system 1.

First, a user of the thin client system 1 inputs a user ID via an input device of the client terminal 10 (Step S101).

Next, the position information acquisition unit 12 of the client terminal 10 obtains the position information from the GPS, determines on the basis of the obtained position information whether the client terminal 10 is positioned inside or outside the company office, and sets a determination result as the position information of the terminal information read from the memory (Step S102).

Next, the communication unit 11 of the client terminal 10 transmits the user ID input in Step S101 and the terminal information in which the position information was set in Step S102 to the policy management device 20 (Step S103). As a result, the communication unit 21 of the policy management device 20 receives the user ID and the terminal information.

Next, the policy information extraction unit 22 of the policy management device 20 extracts the policy information on the basis of the terminal information received from the client terminal 10 (Step S104).

Next, the communication unit 21 of the policy management device 20 transmits the user ID received from the client terminal 10 and the policy information extracted in Step S104 to the server device 30 (Step S105). As a result, the communication unit 31 of the server device 30 receives the user ID and the policy information.

Next, the virtual machine allocation unit 32 of the server device 30 allocates a virtual machine virtualizing the environment of the client terminal 10 to the server device 30 on the basis of the user I D of the client terminal 10, received from the policy management device 20 (Step S106).

Next, the communication unit 31 of the server device 30 transmits the virtual machine information of the client terminal 10 to the client terminal 10 (Step S107). As a result, the communication unit 11 of the client terminal 10 receives the virtual machine information.

Next, the communication unit 11 of the client terminal 10 transmits a request to access the virtual machine to the server device 30 on the basis of the virtual machine information received from the server device 30 (Step S108). As a result, the communication unit 31 of the server device 30 receives the access request.

Next, the access control unit 33 of the server device 30 restricts access from the client terminal 10 via the virtual machine on the basis of the policy information received from the policy management device 20 (Step S109).

With the thin client system 1 according to this embodiment, as described above, a security policy stipulating processing that can be executed on the virtual machine can be determined and applied in accordance with use conditions such as the use location, use time, and terminal classification of the client terminal 10, and therefore security in the thin client system can be heightened.

### [Modified Examples]

Note that the embodiment described above is merely an illustrative example, and is not intended to exclude various amendments and technical applications not disclosed in the embodiment. In other words, the present invention may be implemented after undergoing various amendments within a scope that does not depart from the spirit thereof.

For example, the embodiment described above includes the policy management device 20 and the server device 30 but is not limited thereto. For example, the respective functions of the policy management device 20 may be added to the server device 30 so that the policy management device 20 can be omitted. Further, the respective functions of the policy management device 20 and the server device 30 may be distributed appropriately over a plurality of devices so that the plurality of devices are caused to function as a group in a similar manner to the policy management device 20 and the server device 30 described above.

Furthermore, in the above embodiment, the policy management device 20 includes the client terminal information table 25, the policy management table 26, and the policy information table 27 but is not limited thereto. For example, the client terminal information table 25 and the policy management table 26 may be combined and managed as a single table, or all of the client terminal information table 25, the policy management table 26, and the policy information table 27 may be combined and managed as a single table. Alternatively, the data configurations of the respective tables may be further compartmentalized such that the data are managed on four or more tables.

Further, in the above embodiment, the IP address information, terminal classification information, data storage permission information, and position information are used as the terminal information employed to determine the policy information, but the present invention is not limited thereto as long as at least the position information is included in the terminal information employed to determine the policy information, for example.

Finally, all or a part of the embodiments described above may be described as in the following notes, but the present invention is not limited thereto.

### (Note 1)

A thin client system including: a reception unit that receives a user ID and terminal information including at least current position information from a client terminal; an extraction unit that extracts policy information relating to a security policy stored in association with the terminal information received by the reception unit on the basis of the terminal information; an allocation unit that allocates resources for virtualizing an environment of the client terminal on the basis of the user ID received by the reception unit; and an access control unit that restricts access to the resources allocated by the allocation unit on the basis of the policy information extracted by the extraction unit.

### (Note 2)

The thin client system according to Note 1, wherein the terminal information includes permitted login time information relating to a time during which the client terminal can log into the system.

### (Note 3)

The thin client system according to Note 1 or 2, wherein the terminal information includes terminal classification information for identifying a classification of the client terminal.

### (Note 4)

An access control method for a thin client system, including the steps of: receiving a user ID and terminal information including at least current position information from a client terminal; extracting policy information relating to a security policy stored in association with the terminal information received in the reception step on the basis of the terminal information; allocating resources for virtualizing the client terminal on the basis of the user ID received in the reception step; and restricting access to the resources allocated in the allocation step on the basis of the policy information extracted in the extraction step.

### (Note 5)

An access control program for causing a computer to execute the respective steps described in Note 4.

This application claims priority based on Japanese Patent Application No. 2010-77235, filed on March 30, 2010, the entire disclosure of which is incorporated herein by reference.

The present invention was described above through an embodiment thereof, but the present invention is not limited to the above embodiment, and various modifications that could be understood by a person skilled in the art may be applied to the configurations and details of the present invention within the scope of the present invention.

The thin client system and the access control method and access control program for the thin client system according to the present invention can be used to heighten security.

- 1: thin client system
- 10: client terminal
- 11: communication unit
- 12: position information acquisition unit
- 20: policy management device
- 21: communication unit
- 22: policy information extraction unit
- 25: client terminal information table
- 26: policy management table
- 27: policy information table
- 30: server device
- 31: communication unit
- 32: virtual machine allocation unit
- 33: access control unit

## Claims

1. A thin client system comprising:
a reception unit that receives a user ID and terminal information including at least current position information from a client terminal;
an extraction unit that extracts policy information relating to a security policy stored in association with the terminal information received by the reception unit on the basis of the terminal information;
an allocation unit that allocates resources for virtualizing an environment of the client terminal on the basis of the user ID received by the reception unit; and
an access control unit that restricts access to the resources allocated by the allocation unit on the basis of the policy information extracted by the extraction unit.

2. The thin client system according to claim 1, **characterized in that** the terminal information includes permitted login time information relating to a time during which the client terminal can log into the system.

3. The thin client system according to claim 1 or 2, **characterized in that** the terminal information includes terminal classification information for identifying a classification of the client terminal.

4. An access control method for a thin client system,
the method comprising:
a reception step of receiving a user ID and terminal information including at least current position information from a client terminal;
an extraction step of extracting policy information relating to a security policy stored in association with the terminal information received in the reception step on the basis of the terminal information;
an allocation step of allocating resources for virtualizing the client terminal on the basis of the user ID received in the reception step; and
an access control step of restricting access to the resources allocated in the allocation step on the basis of the policy information extracted in the extraction step.

5. An access control program for causing a computer to execute the respective steps described in claim 4.
